(19) Europäisches Patentamt
European Patent Office
Office européen des brevets

(11) Publication number: 0 120 461
B1

(12) **EUROPEAN PATENT SPECIFICATION**

(45) Date of publication of patent specification: 13.09.89

(51) Int. Cl.$^4$: C 08 L 27/16

(21) Application number: 84103125.5

(22) Date of filing: 21.03.84

# (54) Vulcanizable fluoroelastomer compositions capable of providing vulcanizates having a high adhesion to metals.

(30) Priority: 22.03.83 IT 2019783

(43) Date of publication of application:
03.10.84 Bulletin 84/40

(45) Publication of the grant of the patent:
13.09.89 Bulletin 89/37

(84) Designated Contracting States:
BE CH DE FR GB LI NL SE

(56) References cited:
FR-A-2 091 806
FR-A-2 411 859

CHEMICAL ABSTRACTS, vol. 95, no. 20, 16th November 1981, page 48, no. 170427y, Columbus, Ohio, USA

(73) Proprietor: AUSIMONT S.r.l.
31, Foro Buonaparte
I-20100 Milano (IT)

(72) Inventor: Moggi, Giovanni
14, via Galilei
Milano (IT)
Inventor: Cirillo, Gianna
8-7, Salita di San Francesco
Genova (IT)

(74) Representative: Weinhold, Peter, Dr. et al
Patentanwälte Dr. V. Schmied-Kowarzik Dipl.-Ing. G. Dannenberg Dr. P. Weinhold Dr. D. Gudel Dipl.-Ing. S. Schubert Dr. P. Barz
Siegfriedstrasse 8
D-8000 München 40 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 120 461 B1

**Description**

The present invention relates to fluoroelastomer compositions based on vinylidene fluoride and to a process for preparing therefrom vulcanized articles characterized by high values of adhesive strength to metals.

One of the most important uses of fluorinated elastomers is the manufacture of seals for both static and dynamic applications. A particularly important field in this respect is the sealing of rotary shafts by means of oil seal rings. In such case it is absolutely necessary that there is a perfect adhesion between the fluoroelastomer constituting the sealing element and the metal insert which is maintained even at high temperatures (200—250°C).

In the known processes for vulcanizing fluoroelastomers, diamine compounds such as carbamates were often used in the past and, to a lesser extent, are also employed at present. However, although these vulcanization accelerators provide satisfactory adhesion, they exhibit the drawback of rendering the processing unreliable, due to the occurrence of scorching phenomena.

With the systems based on bisphenol cross-linking agents, such as for example bisphenol AF, and on accelerators based on quaternary salts of phosphonium or of amino-phosphonium, in which the anion is mostly chloride, bromide or tetrafluoroborate, scorching phenomena are avoided, but the adhesion is low. When, by means of proper formulations, nearly acceptable adhesion is reached, they are limited to a narrow concentration range of the accelerator as is provided by Examples 34 through 36.

In FR—A—24 11 859 there are disclosed accelerators for the vulcanization of fluoroelastomers, among others such which are composed of amino-phosphonium cations and conventional anions, e.g. halide ions, although some more complex anions, e.g. $ZnCl_4^{2-}$, $CdCl_4^{2-}$ and $NiBr_4^{2-}$ are also mentioned therein. Said document emphasizes the importance of the cation whereas the influence of the structure and type of the anion on the properties of the accelerator is given no consideration.

It has now surprisingly been found, and this is the object of the present invention, that it is possible to obtain strong rubber/metal adhesion when the phosphonium compound or the amino-phosphonium compound or the ammonium compound which acts as accelerator is present in the form of a compound having as counter-anion $B(C_6H_5)_4^-$ or a complex anion of cadmium, zinc, lead or nickel, such as e.g. $CdCl_4^{2-}$, $Cd_2Cl_6^{2-}$, $CdCl_2Br_2^{2-}$, $CdBr_4^{2-}$, $CdCl_2I_2^{2-}$ $ZnCl_2Br_2^{2-}$, and $ZnCl_3 \cdot P(C_6H_5)_3^-$.

A characteristic of the accelerators used according to the present invention is that they bring about high adhesion values in a wide concentration range of the accelerator, which allows one to obtain satisfactory results even if in the steps for preparing the vulcanizable composition the accelerator was not homogeneously dispersed and its concentration in the composition varied from point to point.

The known vulcanization accelerators based on a phosphonium or amino-phosphonium or ammonium cation have, as a usual counteranion $Cl^-$, $Br^-$, $BF_4^-$ and are used at concentrations of about 1 millimole per 100 g of fluoroelastomer.

In contrast thereto, the accelerators employed according to this invention, can be advantageously employed in a concentration range of from 0.8 to 2.5 milliequivalents of phosphonium or amino-phosphonium or ammonium compound per 100 g of fluoroelastomer without scorching phenomena. This makes it possible to choose fast or slow cross-linking kinetics, depending on the processing requirements of each particular type of rubber.

In general, the present invention relates to a vulcanizable fluoroelastomeric composition, comprising:

A) a copolymer of elastomeric nature based on vinylidene fluoride and on at least another fluorinated monomer;

B) a substance having the property of neutralizing acids and selected from the oxides of divalent metals, the hydroxides of divalent metals and mixtures of such oxides or hydroxides with metal salts of weak acids;

C) an aromatic polyhydroxyl compound suited to act as a vulcanizing agent for the copolymer;

D) as a vulcanization accelerator, a salt consisting of a cation of phosphonium or of amino-phosphonium or of ammonium of the type already known in the art and broadly described for example in U.S. Patents 3,876,654; 4,259,463 and in GB patent 1,356,344 respectively, and of a complex anion, which is the tetraphenylborate anion or in which one atom or two atoms of a metal selected from Cd (II), Zn (II), Pb (II), Ni (II) are bound to chlorine, bromine or iodine atoms and optionally also to a trisubstituted phosphine ligand of the type $P(C_6H_5)_3$ or $P[N(CH_3)(C_6H_5)]_3$. The above complex anion is represented by one of the following formulae:

$$(MeX_4)^{2-},\ (MeX_3Y)^-\ \text{and}\ (Me_2X_6)^{2-}$$

wherein Me is one of the above metals, X is Cl, Br, I, and Y is said phosphine ligand. If the vulcanization accelerating salt comprises an amino-phosphonium cation the complex anion cannot be $ZnCl_4^{2-}$, $CdCl_4^{2-}$ or $NiBr_4^{2-}$. An example of an anion $[Me_2X_6]^{2-}$ is hexachlorodicadmiate:

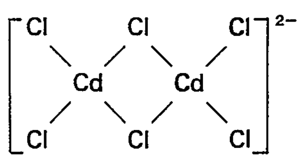

Examples of fluorinated monomers which may be components of the copolymers are perfluorated $C_{1-4}$-alkenes.

As substances B compounds of divalent metals, e.g., compounds of magnesium and calcium, can be used.

An aromatic polyhydroxyl compound C is e.g. bis-phenol AF.

Peeling tests (ASTM D 429) are generally utilized to evaluate the adhesion between elastomer and metal.

This kind of test, however, permits to evaluate the tearing and cracking phenomena occurring in the vulcanized composition, rather than the adhesion of the elastomeric portion to the metal. To obviate this shortcoming, another adhesion evaluation method was utilized. In particular, standard ASTM D 1893, which is specific for plastics, was adapted for the case elastomer/metal. This standard contemplates the quantitative evaluation of the adhesion degree between two layers of alike or different polymeric films.

In the present case, test pieces consisting of metal, adhesive, elastomer were prepared.

The elastomer/metal bonding was accomplished in 3 steps:

a) small metal plates (carbon steel Fe 37 A I; dimensions: 80×25×2 mm) were prepared by degreasing them in an Algofrene® 113 vapour bath, sandblasting with corundum the areas intended for adhesion, and degreasing them once again;

b) the adhesive was applied to the metal so prepared by means of spraying. Chemosil® 511 (Henkel) was utilized as an adhesive;

c) the adhesion between the metal treated with the adhesive and the elastomer is accomplished during the vulcanization-in-press step (elastomer thickness: 8 mm).

To obtain an effective adhesion it is necessary that the cross-linking rates of both the composition and the adhesive area of the same order of magnitude.

Molding conditions: P=6.5 MPa (66 kg/cm$^2$); T°=170°C; time:variable as a function of the accelerator type and of its concentration.

On the test pieces so prepared there was measured the strength necessary to detach the elastomer from the treated metal, using a flat drawn piece (dimensions: 25×2 mm) which moved perpendicularly to the test piece axis at a uniform speed of 50 mm/minute.

The results are expressed in force unit per length unit.

In a few cases, due to the high adhesion values attained with the compounds used according to the present invention, is was not possible to measure the adhesive strength since tearing phenomena occurred in the elastomer.

In these cases, the adhesive strength may be considered to be higher than the measured value (as is indicated in Tables I—IV).

Examples 1—12 (Table I)

Vulcanization accelerators capable of providing, in a wide concentration range, vulcanized compositions with high rubber/metal adhesion values, compared with respect to the anion of the accelerator molecule.

Cation: Trisdimethylaminobenzyl-phosphonium:

$$P^+(C_6H_5CH_2)[N(CH_3)_2]_3$$

Anions:

A.1 Chloride (control) M.P.=208°C; prepared as described in U.S. Patent 2,703,814 (Monsato).

A.2 Tetrafluoroborate (control) M.P.=146°C; prepared from the preceding product by treatment with an aqueous solution of sodium tetrafluoroborate.

A.3 Tetrachlorocadmiate—M.P.=148°C; prepared from a methanol solution of A.1 (2 moles) and one mole of anhydrous cadmium chloride in methanol by evaporating the solvent.

A.4 Tetraphenylborate (M.P.=187°C); prepared from an aqueous solution of A.1 and an equimolecular amount of sodium tetraphenylborate.

Explanatory notes applying to all the Tables:

(1) According to ASTM D 2084-75.

(2) According to ASTM D 1646-74 using a small size rotor.

(3) According to ASTM D 412-75 with 2 mm thick test pieces.

(4) According to ASTM D 1415-74 with 6 mm thick test pieces, reading after 30 seconds.

(5) According to ASTM D 395-75 method B.

(6) According to ASTM D 1893, see page 3.

$T_s2$=time in minutes required to get an increase in the lowest value by 0.226 Nm (2 in. lbs.)

$T_c(50)$=time in minutes required to get a torque of 5.65 Nm (50 in. lbs.).

TABLE No. 1

| Formulation No. | 1 | 2 | 3 | 4 | 5 | 6 |
|---|---|---|---|---|---|---|
| Tecnoflon®NM p. by weight | 100 | 100 | 100 | 100 | 100 | 100 |
| MgO (Maglite®D) p. by weight | 25 | 5 | 5 | 5 | 5 | 5 |
| $Ca(OH)_2$ p. by weight | 5 | 5 | 5 | 5 | 5 | 5 |
| Carbon black MT p. by weight | 25 | 25 | 25 | 25 | 25 | 25 |
| Bisphenol AF p. by weight | 1.8 | 1.8 | 1.8 | 1.8 | 1.8 | 1.8 |
| Accelerator: A4 m. equivalents | 1 | 1.5 | 2 | — | — | — |
| Accelerator: A3 m. equivalents | — | — | — | 1 | 1.5 | 2 |
| Accelerator: A2 m. equivalents | — | — | — | — | — | — |
| Accelerator: A1 m. equivalents | — | — | — | — | — | — |
| Thermomechanical characteristics | | | | | | |
| O.D.R. 175°C(1) | | | | | | |
| Minimum torque Nm (in. lbs.) | 1.36 (12) | 1.58 (14) | 1.36 (12) | 1.13 (10) | 1.13 (10) | 1.70 (15) |
| Maximum torque Nm (in. lbs.) | 13.0 (115) | 14.5 (128) | 14.0 (124) | 11.3 (100) | 11.8 (104) | 12.4 (110) |
| $T_s2$ minutes | 2.9 | 2.4 | 2.3 | 2.1 | 1.3 | 1.2 |
| $T_c(50)$ minutes | 4.3 | 3.3 | 3.1 | 3.9 | 2.3 | 2.0 |
| Viscosity | | | | | | |
| Mooney MS at 121°C(2) | | | | | | |
| minimum | 48 | 47 | 44 | 45 | 47 | 46 |
| minutes for 10-point increases: | 60 | 55 | 50 | 60 | 55 | 50 |
| Vulcanization | | | | | | |
| in press at 170°C×10 minutes | | | | | | |
| in oven at 250°C×16 hours | | | | | | |
| 100% elongation modulus MPa ($kg/cm^2$)(3) | 7.5 (76) | 7.7 (78) | 7.8 (80) | 6.9 (70) | 7.1 (72) | 7.3 (74) |
| Tensile strength MPa ($kg/cm^2$)(3) | 17.4 (177) | 16.2 (165) | 15.2 (155) | 15.7 (160) | 15.2 (155) | 14.7 (150) |
| Elongation at break % (3) | 167 | 160 | 157 | 190 | 180 | 170 |
| Hardness, IRHD(4) | 72 | 73 | 74 | 73 | 72 | 72 |
| Compression set, on | | | | | | |
| O-Rings (φ 25.4×3.53 mm):(5) | | | | | | |
| at 200°C×70 hours | 18 | 19 | 20 | 20 | 20 | 21 |
| at 200°C×168 hours | 29 | 30 | 32 | 28 | 30 | 32 |
| Adhesive strength $N.cm^{-1}$ ($kg \cdot cm^{-1}$)(6) | | | | | | |
| .after vulcanization in press at 170°C×8 minutes | 324 (33) | 314 (32) | 294 (30) | 402 (41) | 245 (25) | 226 (23) |
| .after post-vulcanization in oven at 250°C×16 hours | 157 (16) | 157 (16) | 147 (15) | 353 (36) | 226 (23) | 196 (20) |
| .after post-vulcanization in oven at 250°C×16 hours and aqueous treatment at 100°C×48 hours | 137 (14) | 118 (12) | 118 (12) | 294 (30) | 196 (20) | 177(18) |

TABLE No. 1 (cont.).

| Formulation No. | 7 | 8 | 9 | 10 | 11 | 12 |
|---|---|---|---|---|---|---|
| Tecnoflon®NM p. by weight | 100 | 100 | 100 | 100 | 100 | 100 |
| MgO (Maglite®D) p. by weight | 5 | 5 | 5 | 5 | 5 | 5 |
| $Ca(OH)_2$ p. by weight | 5 | 5 | 5 | 5 | 5 | 5 |
| Carbon black MT p. by weight | 25 | 25 | 25 | 25 | 25 | 25 |
| Bisphenol AF p. by weight | 1.8 | 1.8 | 1.8 | 1.8 | 1.8 | 1.8 |
| Accelerator: A4 m. equivalents | — | — | — | — | — | — |
| Accelerator: A3 m. equivalents | — | — | — | — | — | — |
| Accelerator: A2 m. equivalents | 1.0 | 1.5 | 2.0 | — | — | — |
| Accelerator: A1 m. equivalents | — | — | — | 1.0 | 1.5 | 2.0 |
| Thermomechanical characteristics | | | | | | |
| O.D.R. 175°C[1] | | | | | | |
| Minimum torque Nm (in. lbs.) | 1.47 (13) | 1.47 (13) | 1.81 (16) | 1.81 (16) | 1.92 (17) | 2.15 (19) |
| Maximum torque Nm (in. lbs.) | 11.5 (102) | 12.4 (110) | 13.5 (119) | 12.0 (106) | 12.4 (110) | 13.0 (115) |
| $T_s2$ minutes | 2.8 | 1.9 | 1.7 | 3.9 | 3.0 | 2.1 |
| $T_c$ (50) | 4.7 | 2.9 | 2.3 | 6.3 | 3.8 | 2.9 |
| Viscosity | | | | | | |
| Mooney MS at 121°C[2] | | | | | | |
| minimum | 50 | 48 | 46 | 47 | 46 | 44 |
| minutes for 10-point increase: | 55 | 50 | 45 | 50 | 40 | 35 |
| Vulcanization | | | | | | |
| in press at 170°C×10 minutes | | | | | | |
| in oven at 250°C×16 hours | | | | | | |
| 100% elongation modulus MPa ($kg/cm^2$)[3] | 6.4 (65) | 6.7 (68) | 6.7 (68) | 6.1 (62) | 6.9 (70) | 8.9 (91) |
| Tensile strength MPa ($kg/cm^2$)[3] | 15.7 (160) | 14.7 (150) | 14.2 (145) | 15.7 (160) | 15.7 (160) | 16.1 (164) |
| Elongation at break %[3] | 195 | 180 | 170 | 175 | 165 | 151 |
| Hardness, IRHD[4] | 73 | 72 | 74 | 74 | 75 | 73 |
| Compression set, on | | | | | | |
| O-Rings (φ 25.4×3.53 mm):[5] | | | | | | |
| at 200°C×70 hours | 17 | 18 | 20 | 18 | 20 | 22 |
| at 200°C×168 hours | 30 | 28 | 32 | 27 | 30 | 33 |
| Adhesive strength $N.cm^{-1}$ ($kg \cdot cm^{-1}$)[6] | | | | | | |
| .after vulcanization in press at 170°C×8 minutes | 118 (12) | 98 (10) | 39 (4) | 29 (3) | 59 (6) | 78 (8) |
| .after post-vulcanization in oven at 250°C×16 hours | 157 (16) | 78 (8) | 59 (6) | 0 (0)* | 0 (0)* | 0 (0)* |
| .after post-vulcanization in oven at 250°C×16 hours and aqueous treatment at 100°C×48 hours | 20 (2) | 39 (4) | 29 (3) | 0 (0)* | 0 (0)* | 0 (0)* |

(*) adhesion not measurable

Examples 13—21 (Table 2)
Cation: Hydroxyethyltriphenylphosphonium=$[HOCH_2CH_2P(C_6H_5)_3]^+$

Anions:

B.1 Tetrachlorocadmiate; prepared as described in Inorganica Chimica Acta *60*, (1982) 135—139—M.P.=164°C.

B.2 Chloride (control); prepared by reacting equimolecular amounts of triphenylphosphine and ethylene chlorohydrin in toluene, at reflux during four hours—M.P.=244°C.

B.3 Tetrafluoroborate (control); prepared from a solution of B.2 in water with an equimolar solution of sodium tetrafluoroborate—M.P.=167°C.

TABLE No. 2

| Formulation No. | 13 | 14 | 15 | 16 | 17 | 18 |
|---|---|---|---|---|---|---|
| Tecnoflon® NM p. by weight | 100 | 100 | 100 | 100 | 100 | 100 |
| MgO (Maglite®D) p. by weight | 5 | 5 | 5 | 5 | 5 | 5 |
| $Ca(OH)_2$ p. by weight | 5 | 5 | 5 | 5 | 5 | 5 |
| Carbon black MT p. by weight | 25 | 25 | 25 | 25 | 25 | 25 |
| Bisphenol AF p. by weight | 1.8 | 1.8 | 1.8 | 1.8 | 1.8 | 1.8 |
| Accelerator: B.1 m. equivalents | 1 | 1.5 | 2 | — | — | — |
| Accelerator: B.2 m. equivalents | — | — | — | 1 | 1.5 | 2 |
| Accelerator: B.3 m. equivalents | — | — | — | — | — | — |
| Themomechanical characteristics | | | | | | |
| O.D.R. 175°C[1] | | | | | | |
| Minimum torque Nm (in. lbs.) | 2.03 (18) | 2.03 (18) | 2.03 (18) | 1.81 (16) | 1.92 (17) | 2.03 (18) |
| Maximum torque Nm (in. lbs.) | 9.6 (85) | 10.6 (94) | 10.8 (96) | 7.9 (70) | 8.8 (78) | 9.7 (86) |
| $T_s2$ minutes | 5.2 | 3.8 | 3.0 | 5.5 | 3.4 | 2.4 |
| $T_c$ (50) minutes | 12.2 | 6.7 | 4.7 | 11.5 | 6.0 | 3.7 |
| Viscosity | | | | | | |
| Mooney MS at 100°C[2] | | | | | | |
| minimum | 50 | 50 | 48 | 52 | 50 | 49 |
| minutes for 10-point increase: | 60 | 58 | 55 | 55 | 50 | 45 |
| Vulcanization | | | | | | |
| in press at 170°C×10 minutes | | | | | | |
| in oven at 250°C×16 hours | | | | | | |
| 100% elongation modulus MPa ($kg/cm^2$)[3] | 5.4 (55) | 5.5 (56) | 5.9 (60) | 5.4 (55) | 5.9 (60) | 6.4 (65) |
| Tensile strength MPa ($kg/cm^2$)[3] | 15.7 (160) | 15.9 (162) | 15.2 (155) | 15.2 (155) | 14.7 (150) | 14.7 (150) |
| Elongation at break %[3] | 210 | 199 | 185 | 200 | 195 | 180 |
| Hardness, IRHD[4] | 75 | 73 | 72 | 75 | 74 | 72 |
| Compression set, on | | | | | | |
| O-Rings (ϕ 25.4×3.53 mm):[5] | | | | | | |
| at 200°C×70 hours | 16 | 17 | 19 | 17 | 19 | 22 |
| at 200°C×168 hours | 28 | 30 | 31 | 29 | 29 | 33 |
| Adhesive strength $N.cm^{-1}$ ($kg \cdot cm^{-1}$)[6] | | | | | | |
| .after vulcanization in press at 170°C×9 minutes | >334 (34)* | >245 (25) | >265 (27) | 147 (15) | 147 (15) | 88 (9) |
| .after post-vulcanization in oven at 250°C×16 hours | >206 (21) | >186 (19) | >177 (18) | 226 (23) | 226 (23) | 118 (12) |
| .after post-vulcanization in oven at 250°C×16 hours and aqueous treatment at 100°C×48 hours | 196 (20) | 186 (19) | 128 (13) | 157 (16) | 147 (15) | 98 (10) |

(*) Vulcanization in press at 170°C for 18 minutes

TABLE No. 2 (cont.).

| Formulation No. | 19 | 20 | 21 |
|---|---|---|---|
| Tecnoflon® NM p. by weight | 100 | 100 | 100 |
| MgO (Maglite®D) p. by weight | 5 | 5 | 5 |
| $Ca(OH)_2$ p. by weight | 5 | 5 | 5 |
| Carbon black MT p. by weight | 25 | 25 | 25 |
| Bisphenol AF p. by weight | 1.8 | 1.8 | 1.8 |
| Accelerator: B.1 m. equivalents | — | — | — |
| Accelerator: B.2 m. equivalents | — | — | — |
| Accelerator: B.3 m. equivalents | 1.0 | 1.5 | 2.0 |
| Themomechanical characteristics | | | |
| O.D.R. 175°C[1] | | | |
| Minimum torque Nm (in. lbs.) | 1.70 (15) | 1.81 (16) | 1.92 (17) |
| Maximum torque Nm (in. lbs.) | 8.2 (73) | 9.0 (80) | 10.8 (96) |
| $T_s2$ minutes | 6 | 3.5 | 2.5 |
| $T_c$ (50) minutes | 12 | 6.5 | 3.7 |
| Viscosity | | | |
| Mooney MS at 100°C[2] | | | |
| Minimum | 52 | 50 | 52 |
| minutes for 10-point increase: | 65 | 60 | 55 |
| Vulcanization | | | |
| in press at 170°C×10 minutes | | | |
| in oven at 250°C×16 hours | | | |
| 100% elongation modulus MPa ($kg/cm^2$)[3] | 5.9 (60) | 6.4 (65) | 6.9 (70) |
| Tensile strength MPa ($kg/cm^2$)[3] | 16.2 (165) | 15.7 (160) | 15.2 (155) |
| Elongation at break % [3] | 195 | 190 | 180 |
| Hardness, IRHD[4] | 72 | 71 | 71 |
| Compression set, on | | | |
| O-Rings (ϕ 25.4×3.53 mm):[5] | | | |
| at 200°C×70 hours | 16 | 18 | 21 |
| at 200°C×168 hours | 27 | 29 | 30 |
| Adhesive strength $N.cm^{-1}$ ($kg \cdot cm^{-1}$)[6] | | | |
| .after vulcanization in press at 170°C×9 minutes | (Ø)* | 20 (2) | 29 (3) |
| .after post-vulcanization in oven at 250°C×16 hours | 118 (12) | 59 (6) | 157 (16) |
| .after post-vulcanization in oven at 100°C×48 hours | 118 (12) | 49 (5) | 137 (14) |

(*) Vulcanization in press at 170°C for 18 minutes (Ø) Adhesion not measurable

Example 22—33 (Table 3)

Cation: Benzyltriphenylphosphonium=$[C_6H_5CH_2P(C_6H_5)_3]^+$

Anions:

C.1 Tetrachlorocadmiate—M.P.=218°C; prepared as described in Inorganica Chimica Acta, *60*, 153 (1982).

C.2 Hexachlorocadmiate—M.P. 225°C, prepared as described in Inorganica Chimica Acta, *60*, 153 (1982).

C.3 Chloride (control)—M.P.=307°C (decomposition); a commercial sample (Fluka) was utilized.

C.4 Perchlorate (control); prepared from an aqueous solution of C.3 and equimolar amounts of a saturated solution of sodium perchlorate—M.P.=242°C.

TABLE No. 3

| Formulation No. | 22 | 23 | 24 | 25 | 26 | 27 |
|---|---|---|---|---|---|---|
| Tecnoflon®NM p. by weight | 100 | 100 | 100 | 100 | 100 | 100 |
| MgO (Maglite®D) p. by weight | 5 | 5 | 5 | 5 | 5 | 5 |
| $Ca(OH)_2$ p. by weight | 5 | 5 | 5 | 5 | 5 | 5 |
| Carbon black MT p. by weight | 25 | 25 | 25 | 25 | 25 | 25 |
| Bisphenol AF p. by weight | 1.8 | 1.8 | 1.8 | 1.8 | 1.8 | 1.8 |
| Accelerator: C.1 m. equivalents | 1 | 1.5 | 2 | — | — | — |
| Accelerator: C.2 m. equivalents | — | — | — | 1 | 1.5 | 2 |
| Accelerator: C.3 m. equivalents | — | — | — | — | — | — |
| Accelerator: C.4 m. equivalents | — | — | — | — | — | — |
| Thermomechanical characteristics | | | | | | |
| O.D.R. 175°C[(1)] | | | | | | |
| Minimum torque Nm (in. lbs.) | 1.58 (14) | 1.81 (16) | 1.92 (17) | 1.81 (16) | 1.58 (14) | 1.36 (12) |
| Maximum torque Nm (in. lbs.) | 10.2 (90) | 12.4 (110) | 12.8 (113) | 8.59 (76) | 10.6 (94) | 10.4 (92) |
| $T_s2$ minutes | 4.8 | 4.4 | 4 | 6 | 3.7 | 2.6 |
| $T_c$ (50) minutes | 12.8 | 7.7 | 5.7 | 10.2 | 6.1 | 4.1 |
| Viscosity | | | | | | |
| Mooney MS at 121°C[(2)] Minimum | 55 | 60 | 55 | 54 | 58 | 56 |
| minutes for 10-point increase: | 65 | 60 | 60 | 70 | 65 | 65 |
| Vulcanization | | | | | | |
| in press at 170°C×10 minutes | | | | | | |
| in oven at 250°C×16 hours | | | | | | |
| 100% elongation modulus MPa ($kg/cm^2$)[(3)] | 5.7 (58) | 6.4 (65) | 7.2 (73) | 5.9 (60) | 6.4 (65) | 6.9 (70) |
| Tensile strength MPa ($kg/cm^2$)[(3)] | 15.8 (161) | 16.2 (165) | 16.5 (168) | 16.7 (170) | 16.2 (165) | 15.7 (160) |
| Elongation at break %[(3)] | 188 | 182 | 180 | 195 | 190 | 190 |
| Hardness, IRHD[(4)] | 70 | 71 | 72 | 73 | 72 | 71 |
| Compression set, on | | | | | | |
| O-rings (φ 25.4×3.53 mm):[(5)] | | | | | | |
| at 200°C×70 hours | 16 | 16 | 17 | 16 | 17 | 18 |
| at 200°C×168 hours | 25 | 28 | 29 | 26 | 28 | 29 |
| Adhesive strength $N.cm^{-1}$ ($kg \cdot cm^{-1}$)[(6)] | | | | | | |
| .after vulcanization in press at 170°C×8 minutes | >412 (42) | >451 (46) | >461 (47) | 235 (24)* | 186 (19) | 313 (31) |
| .after post-vulcanization in oven at 250°C×16 hours | >363 (37) | >294 (39) | >245 (25) | 137 (14) | 157 (16) | 294 (30) |
| .after post-vulcanization in oven at 250°C×16 hours and aqueous treatment at 100°C×48 hours | 304 (31) | 245 (25) | 206 (21) | 186 (19) | 108 (11) | 157 (16) |

(*) Vulcanization in press at 170°C for 15 minutes

TABLE No. 3 (cont.).

| Formulation No. | 28 | 29 | 30 | 31 | 32 | 33 |
|---|---|---|---|---|---|---|
| Tecnoflon®NM p. by weight | 100 | 100 | 100 | 100 | 100 | 100 |
| MgO (Maglite®D) p. by weight | 5 | 5 | 5 | 5 | 5 | 5 |
| $Ca(OH)_2$ p. by weight | 5 | 5 | 5 | 5 | 5 | 5 |
| Carbon black MT p. by weight | 25 | 25 | 25 | 25 | 25 | 25 |
| Bisphenol AF p. by weight | 1.8 | 1.8 | 1.8 | 1.8 | 1.8 | 1.8 |
| Accelerator: C.1 m. equivalents | — | — | — | — | — | — |
| Accelerator: C.2 m. equivalents | — | — | — | — | — | — |
| Accelerator: C.3 m. equivalents | — | — | — | 1.0 | 1.5 | 2.0 |
| Accelerator: C.4 m. equivalents | 1.0 | 1.5 | 2.0 | — | — | — |
| Thermomechanical characteristics | | | | | | |
| O.D.R. 175°C[1] | | | | | | |
| Minimum torque Nm (in. lbs.) | 1.81 (16) | 1.92 (17) | 2.03 (18) | 1.36 (12) | 1.58 (14) | 1.70 (15) |
| Maximum torque Nm (in. lbs.) | 9.7 (86) | 10.2 (90) | 10.8 (96) | 9.0 (80) | 12.2 (108) | 13.0 (115) |
| $T_s2$ minutes | 6.7 | 6.0 | 5.7 | 4.0 | 2.5 | 1.8 |
| $T_c$ (50) minutes | 23.5 | 19 | 15 | 6.8 | 3.8 | 2.8 |
| Viscosity | | | | | | |
| Mooney MS at 121°C[2] | | | | | | |
| minimum | 56 | 58 | 58 | 60 | 58 | 58 |
| minutes for 10-point increase: | 60 | 55 | 55 | 65 | 55 | 50 |
| Vulcanization | | | | | | |
| in press at 170°C×10 minutes | | | | | | |
| in oven at 250°C×16 hours | | | | | | |
| 100% elongation modulus MPa ($kg/cm^2$)[3] | 5.9 (60) | 5.8 (59) | 5.7 (58) | 6.4 (65) | 5.5 (56) | 5.4 (55) |
| Tensile strength MPa ($kg/cm^2$)[3] | 17.2 (175) | 16.7 (170) | 16.3 (166) | 17.1 (174) | 16.5 (168) | 15.7 (160) |
| Elongation at break %[3] | 200 | 198 | 190 | 195 | 193 | 188 |
| Hardness, IRHD[4] | 75 | 74 | 72 | 72 | 72 | 71 |
| Compression set, on | | | | | | |
| O-Rings (φ25.4×3.53 mm):[5] | | | | | | |
| at 200°C×70 hours | 17 | 18 | 21 | 19 | 21 | 22 |
| at 200°C×168 hours | 29 | 30 | 32 | 28 | 31 | 32 |
| Adhesive strength $N.cm^{-1}$ ($kg \cdot cm^{-1}$)[6] | | | | | | |
| .after vulcanization in press at 170°C×8 minutes | 137 (14)* | 128 (13)* | 118 (12)* | 88 (9) | 69 (7) | 49 (5) |
| .after post-vulcanization in oven at 250°C×16 hours | 128 (13) | 118 (12) | 98 (10) | >206 (21) | 98 (10) | 49 (5) |
| .after post-vulcanization in oven at 250°C×16 hours and aqueous treatment at 100°C×48 hours | 108 (11) | 98 (10) | 78 (8) | 206 (21) | 78 (8) | 39 (4) |

(*) Vulcanization in press at 170°C for 35 minutes

Examples 35—45 (Table 4)

Cation: Benzyltriethylammonium $[N(C_2H_5)_3CH_2C_6H_5]^+$

Anions:

D.1 Chloride (control); commercial product (Fluka).

D.2 Tetrachlorocadmiate—M.P.=102°C; prepared from 1 mole of $CdCl_2$+2 moles of D.1 in methanol.

Cation: Methyl-tributyl-ammonium $[N(C_4H_9)_3CH_3]^+$

Anions:

D.3 Iodide (control); commercial product (Fluka).

D.4 Tetraiodocadmiate—M.P.=102°C; prepared from 1 mole of $CdI_2$ and 2 moles of D.3 in ethanol.

TABLE No. 4

| Formulation No. | 34 | 35 | 36 | 37 | 38 | 39 |
|---|---|---|---|---|---|---|
| Tecnoflon® NM p. by weight | 100 | 100 | 100 | 100 | 100 | 100 |
| MgO (Maglite®D) p. by weight | 5 | 5 | 5 | 5 | 5 | 5 |
| $Ca(OH)_2$ p. by weight | 5 | 5 | 5 | 5 | 5 | 5 |
| Carbon black MT p. by weight | 25 | 25 | 25 | 25 | 25 | 25 |
| Bisphenol AF p. by weight | 1.8 | 1.8 | 1.8 | 1.8 | 1.8 | 1.8 |
| Accelerator: D.1 m. equivalents | 1.0 | 1.5 | 2.0 | — | — | — |
| Accelerator: D.2 m. equivalents | — | — | — | 1.0 | 1.5 | 2.0 |
| Accelerator: D.3 m. equivalents | — | — | — | — | — | — |
| Accelerator: D.4 m. equivalents | — | — | — | — | — | — |
| Thermomechanical characteristics O.D.R. 175°C(1) | | | | | | |
| Minimum torque Nm (in. lbs.) | 1.81 (16) | 1.81 (16) | 1.81 (16) | 1.81 (16) | 1.92 (17) | 1.81 (16) |
| Maximum torque Nm (in. lbs.) | 10.8 (96) | 10.2 (90) | 11.1 (98) | 10.4 (92) | 10.4 (92) | 10.2 (90) |
| $T_s2$ minutes | 5.5 | 3.1 | 2.2 | 5.5 | 4.1 | 3.5 |
| $T_c$ (50) minutes | 10.3 | 4.7 | 3.2 | 9.7 | 6.2 | 5.5 |
| Compression set, (xx) O-Rings (φ25.4×3.53 mm):(5) | | | | | | |
| at 200°C×70 hours | 23 | 25 | 28 | 26 | 28 | 29 |
| at 200°C×168 hours | 32 | 34 | 37 | 28 | 31 | 33 |
| Adhesive strength $N.cm^{-1}$ ($kg \cdot cm^{-1}$)(6) .after vulcanization in press at 170°C×8 minutes | 196 (20) | 78 (8) | 39 (4) | 216 (22) | 177 (18) | 177 (18) |

(xx) Vulcanization in press at 170°C×10 minutes, in oven at 250°C×16 hours.

TABLE No. 4 (cont.).

| Formulation No. | 40 | 41 | 42 | 43 | 44 | 45 |
|---|---|---|---|---|---|---|
| Tecnoflon®NM p. by weight | 100 | 100 | 100 | 100 | 100 | 100 |
| MgO (Maglite®D) p. by weight | 5 | 5 | 5 | 5 | 5 | 5 |
| $Ca(OH)_2$ p. by weight | 5 | 5 | 5 | 5 | 5 | 5 |
| Carbon black MT p. by weight | 25 | 25 | 25 | 25 | 25 | 25 |
| Bisphenol AF p. by weight | 1.8 | 1.8 | 1.8 | 1.8 | 1.8 | 1.8 |
| Accelerator: D.1 m. equivalents | — | — | — | — | — | |
| Accelerator: D.2 m. equivalents | — | — | — | — | — | — |
| Accelerator D.3 m. equivalents | 1.0 | 1.5 | 2.0 | — | — | — |
| Accelerator: D.4 m. equivalents | — | — | — | 1.0 | 1.5 | 1.0 |
| Thermomechanical characteristics | | | | | | |
| O.D.R. 175°C[(1)] | | | | | | |
| Minimum torque Nm (in. lbs.) | 11.3 (10) | 11.3 (10) | 0.90 (8) | 0.90 (8) | 0.90 (8) | 0.90 (8) |
| Maximum torque Nm (in. lbs.) | 10.4 (92) | 11.1 (98) | 11.1 (98) | 9.4 (83) | 10.8 (96) | 10.8 (96) |
| $T_s2$ minutes | 5.2 | 4.2 | 3.7 | 4.2 | 6.0 | 6.0 |
| $T_c$ (50) minutes | 15.1 | 7.7 | 7.0 | 18.2 | 16.0 | 15.2 |
| Compression set, (xx) | | | | | | |
| O-Rings (φ25.4×3.53 mm):[(5)] | | | | | | |
| at 200°C×70 hours | 26 | 29 | 28 | 24 | 26 | 28 |
| at 200°C×168 hours | 29 | 33 | 35 | 29 | 31 | 33 |
| Adhesive strength $N.cm^{-1}$ ($kg \cdot cm^{-1}$)[(6)] .after vulcanization in press at 170°C×8 minutes | 186 (19) | 157 (16) | 128 (13) | 235 (24) | 216 (22) | 206 (21) |

(xx) Vulcanization in press at 170°C×10 minutes, in oven at 250°C×16 hours.

**Claims**

1. A vulcanizable fluoroelastomeric composition, endowed with a high adhesion to metals when vulcanized, comprising:

A) a copolymer of elastomeric nature based on vinylidene fluoride and on at least another fluorinated monomer;

B) a substance endowed with the property of neutralizing acids, selected from the oxides of divalent metals, hydroxides of divalent metals and mixtures of these oxides and hydroxides with metal salts of weak acids;

C) an aromatic polyhydroxyl compound suited to act as a vulcanizing agent for the copolymer, and characterized in that it contains, as a vulcanization accelerator, a salt consisting of a cation of phosphonium or of amino-phosphonium or of ammonium of the type known in the art, and of a complex anion which is a teraphenylborate anion or an anion in which one atom or two atoms of a metal selected from Cd(II), Zn(II), Pb(II), Ni(II) are bound to chlorine or bromine or iodine atoms and optionally also to a trisubstituted phosphine ligand of the type $P(C_6H_5)_3$, $P[N(CH_3)(C_6H_5)]_3$, said complex anion being represented by one of the following formulae:

$$(MeX_4)^{2-},\ (MeX_3Y)^-,\ (Me_2X_6)^{2-}$$

wherein Me is one of the abovesaid divalent metals, X is chlorine or bromine or iodine, Y is the aforesaid phosphine ligand, with the proviso that if the vulcanization accelerating salt comprises an aminophosphoniumcation the complex anion cannot be $ZnCl_4^{2-}$, $CdCl_4^{2-}$ or $NiBr_4^{2-}$.

2. Manufactured articles comprising vulcanized fluoroelastomers and metal inserts produced by using the vulcanizable compositions as claimed in Claim 1.

**Patentansprüche**

1. Vulkanisierbare Fluorelastomer-Zusammensetzung, die in vulkanisiertem Zustand eine hohe Haftung an Metalle aufweist und die umfaßt:

A) ein Copolymer elastomerer Art auf der Basis von Vinylidenfluorid und mindestens einem anderen fluorierten Monomeren;

B) eine Substanz, mit der Fähigkeit zum Neutralisieren von Säuren, ausgewählt aus den Oxiden zweiwertiger Metalle, Hydroxiden zweiwertiger Metalle und Mischungen dieser Oxide und Hydroxide mit Metallsalzen schwacher Säuren;

C) eine aromatische Polyhydroxylverbindung, die als Vulkanisierungsmittel für das Copolymer wirken kann, dadurch gekennzeichnet, daß sie als Vulkanisationsbeschleuniger ein Salz enthält, bestehend aus einem Kation: Phosphonium oder Aminophosphonium oder Ammonium der bekannten Art, und einem komplexen Anion, das ein Tetraphenylboratanion ist oder ein Anion, in welchem 1 oder 2 Atome eines Metalles, ausgewählt aus Cd(II), Zn(II), Pb(II), Ni(II), an Chlor- oder Brom- oder Jodatome und wahlweise auch an einen trisubstituierten Phosphinliganden Vom Typ $P(C_6H_5)_3$, $P[N(CH_3)(C_6H_5)]_3$ gebunden sind, wobei das komplexe Anion durch eine der folgenden Formeln dargestellt wird:

$$(MeX_4)^{2-},\ (MeX_3Y)^-,\ (Me_2X_6)^{2-}$$

worin Me eines der oben genannten zweiwertigen Metalle ist, X Chlor, Brom oder Jod ist, Y der oben genannte Phosphinligand ist, mit der Maßgabe, daß—falls das die Vulkanisation beschleunigende Salz ein Aminophosphoniumkation umfaßt—das komplexe Anion nicht $ZnCl_4^{2-}$, $CdCl_4^{2-}$ oder $NiBr_4^{2-}$ sein kann.

2. Erzeugnisse, die vulkanisierte Fluorelastomere und Metalleinfügungen bzw. -einlagen umfassen, hergestellt unter Verwendung der vulkanisierten Zusammensetzungungen nach Anspruch 1.

**Revendications**

1. Une composition fluoroélastomère vulcanisable dotée d'une propriété d'adhérence élevée aux métaux après vulcanisation comprenant:

A. un copolymère de nature élastomère à base de fluorure de vinylidène et au moins un autre monomère fluoré;

B. une substance ayant la propriété de neutraliser les acides et choisie parmi les oxydes de métaux divalents, les hydroxydes de métaux divalents et des mélanges de ces oxydes ou hydroxydes avec des sels métalliques d'acide faible;

C. un dérivé aromatique polyhydroxylé susceptible d'agir comme agent de vulcanisation du copolymère; caractérisée en ce qu'elle contient, à titre d'accélérateur de vulcanisation, un sel constitué d'un cation de phosphonium ou d'amino-phosphonium ou d'ammonium du type déjà connu dans l'état de la technique et d'un anion complexe qui est l'anion tétraphénylborate dans lequel un atome ou deux atomes d'un métal choisi parmi Cd (II), Zn (II), Pb (II), Ni (II) sont liés à des atomes de chlore, brome ou iode,

et éventuellement aussi à un ligand de phosphine trisubstitué du type $P(C_6H_5)_3$ ou $P[N(CH_3)(C_6H_5)]_3$, cet anion complexe étant représenté par l'une des formules suivantes:

$$(MeX_4)^{2-};\ (Me\ X_3Y)^-\ \text{et}\ (Me_2X_6)^{2-};$$

dans laquelle:

Me est l'un des métaux ci-dessus,

X représente Cl, Br, I; et

Y représente ce ligand de phosphine;

sous réserve que, si le sel d'accélération de la vulcanisation comprend un cation aminophosphonium, l'anion complexe ne peut pas être $ZnCl_4^{2-}$, $CdCl_4^{2-}$ ou $NiBNr_4^{2-}$.

2. Articles manufacturés comprenant des fluoroélastomères vulcanisés et des inserts de métal obtenus par utilisation des compositions vulcanisables selon la revendication 1.